# EUROPÄISCHE PATENTANMELDUNG

(11) **EP 0 596 331 A1**
(43) Veröffentlichungstag der Anmeldung: **11.05.1994**
(21) Anmeldenummer: 93116999.9
(22) Anmeldetag: 20.10.1993
(51) Int. Cl.: C01D 7/00, C01D 7/07, G21F 9/04

(54) **Umsetzung eines im flüssigen Zustand vorliegenden Alkalimetalls in ein Alkalicarbonat**

(30) Priorität: 02.11.1992 DE 4236833
(71) Anmelder: SIEMENS AKTIENGESELLSCHAFT, D-80333 München (DE)
(72) Erfinder: Tusche, Rudolf, Dr., D-50823 Köln (DE); Hanebeck, Norbert, Dr., D-51491 Overath (DE)

(57) **Zusammenfassung**

Die Erfindung betrifft ein Verfahren zur Umsetzung eines im flüssigen Zustand vorliegenden Alkalimetalls in ein Alkalicarbonat, wobei zunächst ein Gasstrom aus einem Sauerstoff beinhaltenden ersten Gas bereitgestellt wird, in dem das flüssige Alkalimetall dispergiert wird. In einer ersten Umsetzung zwischen dem Alkalimetall und dem ersten Gas entsteht ein in dem Gasstrom dispergiertes Zwischenprodukt. Dem Gasstrom wird weiterhin eine gasförmige Verbindung des Kohlenstoffs, insbesondere Kohlendioxid, zugemischt, welche in einer zweiten Umsetzung mit dem Zwischenprodukt reagiert zu dem gewünschten Alkalicarbonat, welches in in dem Gasstrom feinverteilter Form erhalten wird. Schließlich wird das Alkalicarbonat aus dem Gasstrom abgeschieden. Das Verfahren ist besonders geeignet zur Umsetzung von Natrium zu Natriumcarbonat, wobei es sich besonders eignet zur Umwandlung von Natrium, welches in einem Kernreaktor als Kühlmittel gedient hat, in ein unmittelbar endlagerfähiges Produkt. Die Erfindung betrifft auch eine Vorrichtung zur Durchführung des Verfahrens.

## Beschreibung

Die Erfindung betrifft die Umsetzung eines im flüssigen Zustand vorliegenden Alkalimetalls in ein Alkalicarbonat.

Die Erfindung bezieht sich insbesondere auf die Entsorgung größerer Mengen eines Alkalimetalls, insbesondere Natrium, wozu das chemisch sehr reaktive Alkalimetall in eine weitgehend unproblematische Verbindung, bevorzugtermaßen Alkalicarbonat, umgesetzt werden muß. Die Entsorgung eines Alkalimetalls oder einer Legierung aus Alkalimetallen ist besonders problematisch, wenn das Alkalimetall bzw. die Legierung als Kühlmittel in einem Kernreaktor eingesetzt und daher mit radioaktiven Isotopen kontaminiert wurde. Eine vollständige Dekontaminierung von radioaktiven Isotopen ist vielfach nicht praktikabel, da radioaktive Isotope des Alkalimetalls selbst vorhanden sind, die sich in technischem Maßstab von dem übrigen Alkalimetall nicht trennen lassen. Aus diesem Grunde kommt für ein Alkalimetall, das als Kühlmittel in einem Kernreaktor verwendet wurde, im Regelfall nur eine Entsorgung durch Endlagerung in Frage.

Wegen ihrer chemischen Reaktionsbereitschaft sind elementare Alkalimetalle nicht direkt fähig zur Endlagerung, sie müssen zur Endlagerung in hinreichend inerte chemische Verbindungen umgesetzt werden. Auch sind die relativ einfach zu erhaltenden Oxide und Hydroxide der Alkalimetalle zur Endlagerung nicht geeignet, da auch ihre chemische Reaktionsbereitschaft zu ausgeprägt ist.

Zur Endlagerung kommen daher lediglich Alkalisalze, wie Carbonate, Sulfate und Chloride, in Frage.

Bei der chemischen Umwandlung eines Alkalimetalls in eine zur Endlagerung geeignete Salzverbindung tritt stets eine unvermeidliche Massenvergrößerung zutage, woraus u.a. auch ein erheblich vergrößertes Volumen für das zur Endlagerung fähige Salz resultiert. Dementsprechend ist unter den salzartigen Alkaliverbindungen das Carbonat besonders ausgezeichnet, da die mit der Bildung des Carbonates verbundene Massenvergrößerung im Vergleich zu allen anderen in Frage kommenden Verbindungen am geringsten ist.

Bei den üblicherweise durchgeführten chemischen Umsetzungen von Alkalimetallen zu Salzen bedient man sich einer Flüssigkeit zum Auflösen des Metalls. Dabei wird ein alkalisches Zwischenprodukt erhalten, das durch Neutralisierung in ein salzartiges Produkt überführt und schließlich getrocknet wird, um ein zur Endlagerung fähiges Produkt zu erhalten. Alle hierfür bekannten Verfahren erfordern jedoch die Aufwendung großer Flüssigkeitsmengen, um insbesondere die bei der Auflösung des Alkalimetalls freiwerdende Wärme aufzunehmen, und sind dementsprechend mit erheblichen apparativen Aufwendungen verbunden.

Nach der CH-PS 135 214 erfolgt die Herstellung eines Alkalioxids durch Oxidation eines Alkalimetalls, wobei ein Bad eines flüssigen Alkalimetalls unter Bewegung der Einwirkung von Sauerstoff unterworfen wird.

Nach der EP 0 245 148 B1 wird Natrium in Natriumhydroxid umgewandelt, indem flüssiges Natrium in Wasser oder eine wäßrige Lösung eingedüst wird. Der gesamte Inhalt der EP 0 245 148 B1, zu dem unter anderen Erwägungen zur Entsorgung von radioaktiv kontaminiertem Natrium gehören, ist als Teil vorliegender Offenbarung anzusehen.

Nach der DE 36 01 647 A1 bzw. der DE 36 01 648 A1 werden alkoholhaltige Lösungen, die Alkalimetallverbindungen enthalten, aufgearbeitet, indem die Alkalimetalle durch Fällung in einem Absorptionsbett oder in der Flüssigphase aus den alkoholhaltigen Lösungen entfernt werden.

Demgegenüber liegt vorliegender Erfindung die Aufgabe zugrunde, ein Verfahren zur Umsetzung eines Alkalimetalls in ein Alkalicarbonat anzugeben, das keine großen Flüssigkeitsmengen erfordert und auf einfachem Wege ein unmittelbar zur Endlagerung fähiges Produkt, nämlich Alkalicarbonat, liefert. Außerdem soll eine Vorrichtung zur Durchführung des Verfahrens angegeben werden.

Das erfindungsgemäße Verfahren zur Umsetzung eines in flüssigem Zustand vorliegenden Alkalimetalls in ein Alkalicarbonat beinhaltet folgende Schritte:
a) Bereitstellung eines Gasstroms aus einem ersten Gas, welches elementaren Sauerstoff beinhaltet;
b) Dispergierung des flüssigen Alkalimetalls in dem Gasstrom zur Herbeiführung einer ersten Umsetzung zwischen dem Alkalimetall und dem ersten Gas;
c) Bildung eines in dem Gasstrom dispergierten Zwischenproduktes aus dem Alkalimetall und dem ersten Gas in der ersten Umsetzung;
d) Zumischung eines zweiten Gases, welches eine gasförmige Verbindung des Kohlenstoffes beinhaltet, zu dem Gasstrom zur Herbeiführung einer zweiten Umsetzung zwischen dem Zwischenprodukt und der Verbindung des Kohlenstoffs;
e) Bildung des Alkalicarbonates in der zweiten Umsetzung, wobei das Alkalicarbonat in dem Gasstrom in dispergierter Form entsteht;
f) Abscheidung des Alkalicarbonates aus dem Gasstrom.

Erfindungsgemäß erfolgt die Umsetzung des Alkalimetalls in ein Alkalicarbonat im Flugstrom, wobei das Alkalimetall, das im Wege des zweistufigen Umsetzungsprozesses entstehende Zwischenprodukt und das schließlich erhaltene Alkalicarbonat in einem Gasstrom dispergiert sind. Dabei kann auf Umsetzungen in flüssigen Phasen praktisch vollständig verzichtet werden. Da die Umsetzungen sämtlich im Flugstrom erfolgen, laufen sie sehr schnell und vollständig ab und erlauben somit eine Realisierung des Verfahrens in einer besonders kompakten Anlage. Dies kommt den Anforderungen bei der Entsorgung von Kühlmittel aus Kernreaktoren besonders entgegen, da somit radioaktive Stoffe in einer relativ kleinen, problemlos umschließbaren und überwachbaren Anlage eingeschlossen bleiben können.

Die Bereitstellung des Alkalimetalls im flüssigen Zustand stellt in keinem Fall ein wesentliches Problem dar, da alle Alkalimetalle relativ niedrige Schmelzpunkte aufweisen. Sofern also das umzusetzende Alkalimetall nicht ohnehin bereits flüssig ist, ist seine Verflüssigung keinesfalls ein wesentliches Problem.

Das erste Gas, welches sich in einer ersten Umsetzung mit dem Alkalimetall zu dem Zwischenprodukt verbindet, ist günstigerweise im wesentlichen ein Gemisch aus Sauerstoff und einem Inertgas, insbesondere Stickstoff. Mit einem solchen ersten Gas ist die erste Umsetzung, der das Alkalimetall unterworfen wird, in erster Linie eine Verbrennung, welche übrigens in Anbetracht der feinen Verteilung des Alkalimetalls in dem Gasstrom relativ schnell und vollständig vor sich geht. Das Gemisch aus Sauerstoff und dem Inertgas kann in seiner Zusammensetzung fein abgestimmt werden, um die erste Umsetzung in ihrem Ablauf zu kontrollieren. Insbesondere ist die Produktion von Wärme in der ersten Umsetzung durch Einstellung des Mischungsverhältnisses von Sauerstoff und Inertgas auf einen vorgegebenen, gewünschten Wert einstellbar. Das erste Gas wird vorteilhafterweise zumindest zum Teil aus Luft gebildet, wobei der Luft entsprechend der jeweiligen Anforderung zusätzlicher Sauerstoff oder zusätzliches Inertgas, vorzugsweise zusätzlicher Stickstoff, zugeführt wird.

Um den Ablauf der ersten Umsetzung fein zu steuern und den Gasstrom, in dem die erste Umsetzung stattfindet, in gewissem Umfang zu kühlen, kann dem Gasstrom unmittelbar nach der Dispergierung des Alkalimetalls ein Inertgas, insbesondere Stickstoff, zugeführt werden. Auf diese Weise wird es möglich, die erste Umsetzung in einem relativ sauerstoffreichen Gasstrom zu initiieren, um sie anschließend durch die Zufuhr des Inertgases abzumildern, insbesondere im Hinblick auf die Wärmeproduktion. Dadurch kann eine unzuträgliche Belastung der Anlage, in der das Verfahren ausgeführt wird, zuverlässig verhindert werden, und darüber hinaus ist eine feinfühlige Kontrolle der ersten Umsetzung möglich.

Günstig ist es auch, wenn das erste Gas einen gewissen Anteil von Wasserdampf beinhaltet. In diesem Fall entsteht in dem Gasstrom bei der ersten Umsetzung Alkalihydroxid zusätzlich zu Alkalioxid, was im Hinblick auf die Weiterverarbeitung des Zwischenproduktes von Bedeutung sein kann. Außerdem kann überschüssig dem Gasstrom zugeführter Wasserdampf nach Beendigung der ersten Umsetzung in dem Gasstrom verblieben sein und evtl. zu einer Erhöhung der Umsetzungsrate der zweiten Umsetzung, die deutlich weniger exotherm ist als die erste Umsetzung, beitragen. Darüber hinaus ist ein gewisser Anteil von Wasser in dem Gasstrom gegebenenfalls nützlich für die Agglomeration und Abscheidung des schließlich erhaltenen Alkalicarbonates.

Im Rahmen einer besonders vorteilhaften Weiterbildung wird die Zufuhr von Sauerstoff zu dem Gasstrom vor oder während der Dispergierung des Alkalimetalls so eingestellt, daß ein für die erste Umsetzung etwa stöchiometrischer Wert erreicht wird. Diese Weiterbildung ist insbesondere möglich wegen der hohen Umsetzungsrate in der ersten Umsetzung, welche aufgrund der feinen Dispersion des Alkalimetalls in dem Gasstrom erzielt wird. Sie gestattet insbesondere die Weiterbildung des Verfahrens dahingehend, daß ein Strom eines Inertgases in geschlossenem Kreislauf geführt, nacheinander mit Alkalimetall, Sauerstoff, ggf. Wasserdampf sowie gasförmiger Kohlenstoffverbindung beschickt und von dem aus diesen Agenzien schließlich entstandenen Alkalicarbonat befreit wird. Gegebenenfalls sind zur Konstanthaltung der Temperaturen in dem Gasstrom Maßnahmen zur Kühlung erforderlich.

Die im Verfahren eingesetzte Verbindung des Kohlenstoffs ist günstigerweise ein Oxid des Kohlenstoffs, vorzugsweise Kohlendioxid, welches frei im Handel verfügbar ist. Insbesondere die Verwendung von Kohlendioxid liefert günstige Ausgangsbedingungen für die zweite Umsetzung, die das Alkalicarbonat liefert.

Günstigerweise besteht das zweite Gas im wesentlichen aus der gasförmigen Verbindung des Kohlenstoffs, da auf diese Weise die wenig exotherme zweite Umsetzung begünstigt wird.

Besonders günstig ist es weiterhin, die Zumischung der Verbindung des Kohlenstoffs zu dem Gasstrom auf einen für die zweite Umsetzung etwa stöchiometrischen Wert einzustellen, da hierdurch wiederum ein geschlossener Kreislauf für den Gasstrom mit allen bereits erwähnten Vorteilen möglich wird.

Ebenfalls zur Begrenzung der Aufheizung des Gasstromes bei der Bildung des Zwischenproduktes und des Alkalicarbonates ist es vorteilhaft, den Gasstrom zwischen der Dispergierung des Alkalimetalls und der Abscheidung des Alkalicarbonates zu kühlen. Auf diese Weise kann die bei exothermen Umsetzungen freigewordene Wärme abgeführt werden, und es sind thermodynamisch günstige Bedingungen zur Abscheidung des Alkalicarbonates erreichbar.

Besonders vorteilhaft ist es, zur Abscheidung des Alkalicarbonates den Gasstrom mit Wasser, insbesondere in Form von Dampf oder Nebel, zu versetzen. Die Zufuhr von Wasser hat einen positiven Effekt auf die Agglomeration des in dem Gasstrom fein verteilten Alkalicarbonates und kann insbesondere eine vorhergehende Maßnahme zur Abscheidung des Alkalicarbonates mit rein mechanischen Mitteln, beispielsweise einem Zentrifugalseparator, unterstützen. Durch Zufuhr von Wasser kann der Gasstrom insbesondere von restlichen Feinstäuben des Alkalicarbonates befreit werden.

Die Dispergierung des Alkalimetalls in dem Gasstrom erfolgt vorteilhafterweise durch Eindüsung des flüssigen Alkalimetalls in den Gasstrom.

Das erfindungsgemäße Verfahren zur Umsetzung eines im flüssigen Zustand vorliegenden Alkalimetalls in ein Alkalicarbonat ist insbesondere geeignet zur Umsetzung von Natrium in Natriumcarbonat. Hierbei kommt insbesondere Natrium in Frage, das mit radioaktiven Isotopen kontaminiert ist und in ein unmittelbar zur Endlagerung fähiges Produkt überführt werden soll. Hierfür ist das Verfahren, bei dem ein Gasstrom aus Inertgas in den Kreislauf geführt wird, insbesondere im Zusammenhang mit stöchiometrischer Zufuhr von Sauerstoff und Kohlendioxid, besonders geeignet.

Die Erfindung betrifft auch eine Vorrichtung zur Durchführung des beschriebenen Verfahrens, welche folgende Bestandteile aufweist:
a) ein Leitungssystem zur Führung des Gasstroms;
b) eine Sprühvorrichtung in dem Leitungssystem zur Dispergierung des flüssigen Alkalimetalls in dem Gasstrom;
c) eine abströmseitig der Sprühvorrichtung in dem Leitungssystem angeordnete Anordnung von Düsen zur Zuführung des zweiten Gases zu dem Gasstrom;
d) eine abströmseitig der Düsen in dem Leitungssystem angeordnete Abscheideeinrichtung zur Abscheidung von Partikeln aus dem Gasstrom.

Mit dieser Vorrichtung ist unter Bereitstellung eines Gasstroms geeigneter Zusammensetzung, der also insbesondere Sauerstoff enthalten muß, eine einfache Aufarbeitung von Alkalimetall zu einem chemisch inerten Produkt im Rahmen des erfindungsgemäßen Verfahrens möglich.

Um die Zufuhr von Sauerstoff zu der zunächst erforderlichen Oxidation des Alkalimetalls fein regeln zu können, ist es vorteilhaft, das Leitungssystem zuströmseitig der Sprühvorrichtung mit Düsen zur Zuführung des ersten Gases, welches den zur Oxidation erforderlichen Sauerstoff mitbringt, zu versehen. Im Rahmen dieser Ausgestaltung kann mit weiterem Vorteil das Leitungssystem einen geschlossenen Kreislauf bilden, in dem ein Inertgas als Gasstrom geführt wird, und dem Gasstrom können definiert und kontrolliert Sauerstoff, Inertgas, kohlenstoffhaltiges Gas und ggf. weitere Zusatzstoffe zugeführt werden. Eine feinfühlige Steuerung der teilweise stark exothermen Reaktionen in dem Leitungssystem ist somit möglich. Das einen geschlossenen Kreislauf bildende Leitungssystem weist vorteilhafterweise ein Innenrohr und ein Außenrohr auf, wobei das Innenrohr in dem Außenrohr liegt, und wobei die Sprühvorrichtung, die Düsen zur Zuführung des zweiten Gases und die Abscheideeinrichtung in dem Innenrohr angeordnet sind. Derart finden alle exothermen Reaktionen in dem Innenrohr statt, welches insbesondere durch das Außenrohr in gewissem Umfang abgeschirmt ist, was der Betriebssicherheit der Vorrichtung zugute kommt. Außerdem kann der zwischen dem Innenrohr und dem Außenrohr strömende Gasstrom in gewisser Weise zur Abführung von Wärme, die bei dem exothermen Reaktionen frei wird, genützt werden. Um die thermische Belastung der Vorrichtung zu begrenzen, ist das Vorsehen eines Kühlmantels zur Kühlung des Innenrohres besonders vorteilhaft.

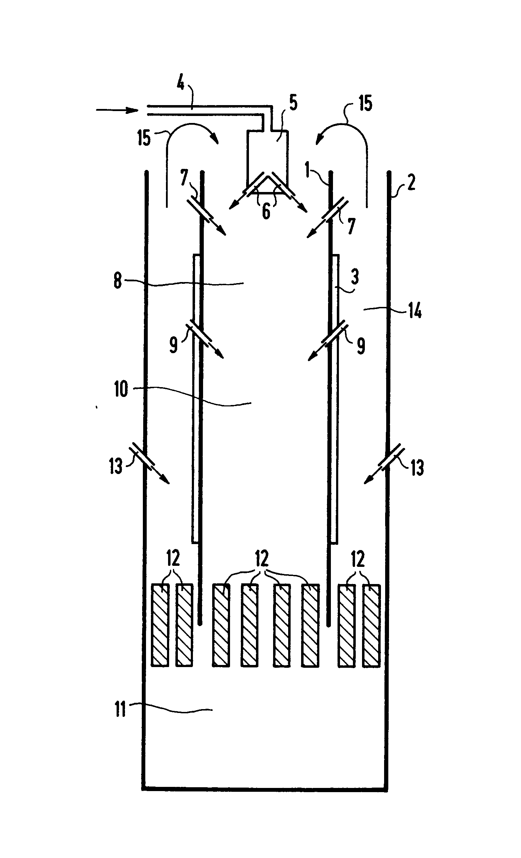

Ein Ausführungsbeispiel der Erfindung ist dargestellt in der Zeichnung, aus der eine Prinzipskizze für eine Vorrichtung zur Durchführung des Verfahrens hervorgeht.

Die Vorrichtung ist gebildet mit einem offenen Innenrohr 1, welches in ein geschlossenes Außenrohr 2 hineinragt, so daß der Gasstrom, symbolisiert durch Pfeile 15, das Innenrohr 1 von oben nach unten durchströmen und zwischen dem Innenrohr 1 und dem Außenrohr 2 wieder nach oben gelangen kann. Einrichtungen zum Ingangsetzen des Gasstroms sind der Übersicht halber nicht dargestellt. Um die bei den verschiedenen Umsetzungen anfallende Wärme abzuführen, ist das Innenrohr 1 mit einem Kühlmantel 3 versehen; dieser Kühlmantel kann z.B. eine Rohrschlangenanordnung sein, durch die Kühlwasser strömt. Das flüssige Alkalimetall wird der Vorrichtung durch eine Zuführleitung 4 zugeführt und gelangt zu einer Sprühvorrichtung 5, aus der es durch Düsen 6 dem Gasstrom zugeführt werden kann. Im wesentlichen gleichzeitig mit der Zuführung und Dispergierung des Alkalimetalls wird dem Gasstrom das erste, Sauerstoff enthaltende Gas durch Düsen 7 zugestellt. Die Düsen 7 sind aufgeführt stellvertretend für mögliche komplexe Anordnungen solcher Düsen 7, aus welchen Anordnungen dem Gasstrom Sauerstoff, Wasserdampf und Inertgas gestaffelt zugeführt werden können. Die erste Umsetzung zwischen dem ersten Gas und dem Alkalimetall geht vor sich in einer ersten Reaktionszone 8 unterhalb der Sprühvorrichtung 5 und der Düsen 7. Hinter der ersten Reaktionszone 8 wird dem Gasstrom durch entsprechende Düsen 9 Kohlendioxid zugestellt. In der zweiten Reaktionszone 10 unterhalb der Düsen 9 setzt sich das Kohlendioxid um mit dem in der ersten Umsetzung erhaltenen Zwischenprodukt zu dem gewünschten Alkalicarbonat. Das Alkalicarbonat wird erhalten in in dem Gasstrom fein verteilter Form. Unterhalb der zweiten Reaktionszone 10 liegt die Abscheidezone 11, in der eine Agglomeration des Alkalicarbonates und eine Abscheidung aus dem Gasstrom stattfindet. Stellvertretend für weitere Abscheideeinrichtungen sind Strömungshindernisse 12 dargestellt, welche der Gasstrom umströmen muß, wobei er durch enge Querschnitte geführt wird, die eine Agglomeration des fein verteilten Alkalicarbonats begünstigen. In der Abscheidezone 11 kann das aus dem Gasstrom abgeschiedene Alkalicarbonat gesammelt werden; von dort muß es periodisch entfernt werden.

In der Nähe der Abscheidezone 11 sind weiterhin vorgesehen Düsen 13, durch die Wasser in Form von Dampf oder Nebel eingesprüht werden kann, um auch eine Abscheidung feinster Stäube des Alkalicarbonates aus dem Gasstrom zu ermöglichen. Hierfür können ggf. weitere Filtereinrichtungen in der Vorrichtung vorgesehen sein. Zwischen dem Innenrohr 1 und dem Außenrohr 2 liegt eine Rückstromzone 14 für den Gasstrom, durch die er nach oben geführt und erneut in das Innenrohr 1 eingespeist werden kann. Bei der Darstellung der Vorrichtung ist davon abgesehen worden, Zustelleinrichtungen für die verschiedenen Gase sowie Kühlwasser und Wasser zur Einführung in den Gasstrom darzustellen; es sind jeweils die entsprechenden Düsen 7, 9 und 13 bzw. der Kühlmantel 3 dargestellt. Erfindungsgemäß unterliegt die Auswahl der entsprechenden Zustelleinrichtungen keinen über die einschlägigen Fachkenntnisse hinausgehenden Beschränkungen.

Die dargestellte Vorrichtung ist insbesondere geeignet zur Umsetzung von Natrium, welches als Kühlmittel in einem Kernreaktor verwendet wurde, in ein endlagerfähiges Produkt.

## Patentansprüche

1. Verfahren zur Umsetzung eines im flüssigen Zustand vorliegenden Alkalimetalls in ein Alkalicarbonat,
gekennzeichnet durch:
a) Bereitstellung eines Gasstroms aus einem ersten Gas, welches elementaren Sauerstoff beinhaltet;
b) Dispergierung des flüssigen Alkalimetalls in dem Gasstrom zur Herbeiführung einer ersten Umsetzung zwischen dem Alkalimetall und dem ersten Gas;
c) Bildung eines in dem Gasstrom dispergierten Zwischenproduktes aus dem Alkalimetall und dem ersten Gas in der ersten Umsetzung;
d) Zumischung eines zweiten Gases, welches eine gasförmige Verbindung des Kohlenstoffs beinhaltet, zu dem Gasstrom zur Herbeiführung einer zweiten Umsetzung zwischen dem Zwischenprodukt und der Verbindung des Kohlenstoffs;
e) Bildung des Alkalicarbonates in der zweiten Umsetzung, wobei das Alkalicarbonat in dem Gasstrom in dispergierter Form entsteht;
f) Abscheidung des Alkalicarbonates aus dem Gasstrom.

2. Verfahren nach Anspruch 1, bei dem das erste Gas im wesentlichen ein Gemisch aus Sauerstoff und einem Inertgas, insbesondere Stickstoff, ist.

3. Verfahren nach Anspruch 2, bei dem das erste Gas zumindest teilweise aus Luft gebildet ist.

4. Verfahren nach einem der vorhergehenden Ansprüche, bei dem dem Gasstrom unmittelbar nach der Dispergierung des Alkalimetalls ein Inertgas, insbesondere Stickstoff, zugeführt wird.

5. Verfahren nach einem der vorhergehenden Ansprüche, bei dem das erste Gas Wasserdampf beeinhaltet.

6. Verfahren nach einem der vorhergehenden Ansprüche, bei dem vor oder während der Dispergierung des Alkalimetalls der Gehalt an Sauerstoff in dem Gasstrom auf einen für die erste Umsetzung etwa stöchiometrischen Wert eingestellt wird.

7. Verfahren nach einem der vorhergehenden Ansprüche, bei dem die Verbindung des Kohlenstoffs ein Oxid des Kohlenstoffs, vorzugsweise Kohlendioxid, ist.

8. Verfahren nach einem der vorhergehenden Ansprüche, bei dem das zweite Gas im wesentlichen aus der Verbindung des Kohlenstoffs besteht.

9. Verfahren nach einem der vorhergehenden Ansprüche, bei dem zur Abscheidung des Alkalicarbonats der Gasstrom mit Wasser, insbesondere in Form von Dampf oder Nebel, versetzt wird.

10. Verfahren nach einem der vorhergehenden Ansprüche, bei dem die Zumischung der Verbindung des Kohlenstoffs auf einen für die zweite Umsetzung etwa stöchiometrischen Wert eingestellt wird.

11. Verfahren nach einem der vorhergehenden Ansprüche, bei dem der Gasstrom zwischen der Dispergierung des Alkalimetalls und der Abscheidung des Alkalicarbonats gekühlt wird.

12. Verfahren nach einem der vorhergehenden Ansprüche, bei dem die Dispergierung des Alkalimetalls durch Eindüsung in den Gasstrom erfolgt.

13. Anwendung des Verfahrens nach einem der vorhergehenden Ansprüche zur Umsetzung von Natrium in Natriumcarbonat.

14. Anwendung nach Anspruch 13 zur Umsetzung von Natrium, das mit radioaktiven Isotopen kontaminiert ist, in ein unmittelbar endlagerfähiges Produkt.

15. Vorrichtung zur Durchführung des Verfahrens nach einem der Ansprüche 1 bis 12, umfassend
a) ein Leitungssystem (1,2) zur Führung des Gasstroms;
b) eine Sprühvorrichtung (5) in dem Leitungssystem (1,2) zur Dispergierung des flüssigen Alkalimetalls in dem Gasstrom;
c) eine abströmseitig der Sprühvorrichtung
(5) in dem Leitungssystem (1,2) angeordnete Anordnung von Düsen (9) zur Zuführung des zweiten Gases zu dem Gasstrom;
d) eine abströmseitig der Düsen (9) in dem Leitungssystem (1,2) angeordnete Abscheideeinrichtung (12) zur Abscheidung von Partikeln aus dem Gasstrom.

16. Vorrichtung nach Anspruch 15, bei der das Leitungssystem (1,2) zuströmseitig der Sprühvorrichtung (5) Düsen (7) zur Zuführung des ersten Gases zu dem Gasstrom aufweist.

17. Vorrichtung nach Anspruch 16, bei der das Leitungssystem (1,2) einen geschlossenen Kreislauf bildet.

18. Vorrichtung nach Anspruch 17, bei der das Leitungssystem (1,2) gebildet ist mit einem Innenrohr (1) und einem Außenrohr (2), wobei das Innenrohr (1) in dem Außenrohr (2) liegt, und wobei die Sprühvorrichtung (5), die Düsen (9) zur Zuführung des zweiten Gases und die Abscheideeinrichtung (12) in dem Innenrohr (1) angeordnet sind.

19. Vorrichtung nach Anspruch 18, bei der das Innenrohr (1) einen Kühlmantel (3) hat.
